# EUROPÄISCHE PATENTSCHRIFT

(11) **EP 0 571 378 B1**
(45) Veröffentlichungstag und Bekanntmachung des Hinweises auf die Patenterteilung: **21.06.1995**
(21) Anmeldenummer: 91904118.6
(22) Anmeldetag: 21.02.1991
(51) Int. Cl.: B62J 1/16, B62J 9/00

(54) **GEPÄCKTRÄGER FÜR EIN/AN EINEM ZWEIRADFAHRZEUG**
LUGGAGE CARRIER FOR OR ON A TWO-WHEELED VEHICLE
PORTE-BAGAGES POUR VEHICULE A DEUX ROUES, SEPARE OU INTEGRE A CE VEHICULE

(43) Veröffentlichungstag der Anmeldung: 01.12.1993
(73) Patentinhaber: Dickhaus, Reiner, D-33106 Paderborn (DE)
(72) Erfinder: Dickhaus, Reiner, D-33106 Paderborn (DE)
(74) Vertreter: Hanewinkel, Lorenz, Dipl.-Phys.
(86) Internationale Anmeldenummer: EP9100328
(87) Internationale Veröffentlichungsnummer: WO9214642

(56) Entgegenhaltungen:
- FR-A- 2 574 040
- FR-E- 51 041
- GB-A- 2 091 176
- US-A- 3 873 127

## Beschreibung

Die Erfindung bezieht sich auf einen Gepäckträger für ein Zweiradfahrzeug, der einen Behälter mit zwei nach oben offenen Kammern und einem diese Kammern verschließenden und die Behälter-Oberseite überdeckenden Deckel aufweist, wobei zwischen den beiden Kammern ein als Radkasten ausgebildeter Freiraum zum Übergreifen eines Rades des Zweiradfahrzeuges bei der Befestigung des Gepäckträgers am Rahmen des Zweiradfahrzeuges vorhanden ist.

Ein derartiger Gepäckträger ist aus der FR-A-2 574 040 bekannt, welcher als Tragetasche für ein Baby (Kind) und zur Aufnahme von Waren in den Kammern ausgebildet ist. Der Deckel bildet in der hochgeklappten Stellung eine Rückenlehne und Armstützen für das eingesetzte Kind und überdeckt in der heruntergeklappten Stellung die Oberseite der Tragetasche.

Weiterhin ist aus der FR-E-51 041 ein Handkoffer für ein Fahrrad bekannt geworden, der ebenfalls zwei Kammern für die Aufnahme von Waren und einen Kofferdeckel hat, der in einer Schließstellung oben auf dem Koffer für den Transport von Waren und in einer an der Koffer-Rückseite festlegbaren Stellung beim Mitnehmen eines unter Zwischenlage eines Polsters auf den Kammern sitzenden Kindes abnehmbar und festlegbar gehalten ist.

Schließlich offenbart die GB-A-2 091 176 einen kombinierten Gepäck- und Kinderträger, der ebenfalls einen Behälter mit zwei Kammern für die Aufnahme von Waren und zum Einstellen der Füße eines Kindes aufweist. Ein die Kammern verschließender und den Behälter überdeckender Deckel ist als abnehmbares Sitzteil ausgebildet, welches für die Kindaufnahme in den Behälter in verdrehter Lage eingesetzt wird und dabei eine Sitzfläche und Rückenlehne ergibt.

Die aus dem Stand der Technik bekannten Gepäckträger zeigen den Nachteil einer ungünstigen Handhabung ihres Deckels für die Umwandlung in einen Kindersitz sowie einer unzureichenden Lagefixierung und unsicheren Kindaufnahme.

Aufgabe der Erfindung ist es, einen nach der eingangs genannten Art aufgebauten Gepäckträger dahingehend zu verbessern, daß der Gepäckträger in einfacher Weise zu einem sicheren Kindersitz umgewandelt werden kann und dabei der Deckel gegenüber dem Behälter einfach lageverändert und in der Sitzstellung sicher lagefixiert ist.

Diese Aufgabe wird erfindungsgemäß durch die kennzeichnenden Merkmale des Patentanspruches 1 gelöst, wobei sich die daran anschließenden Unteransprüche 2 bis 6 vorteilhafte und förderliche Weiterbildungsmerkmale enthalten.

In Verbindung mit dieser Umwandelbarkeit in einen Kindersitz soll der Gepäckträger
a) einen in sich stabil ausgeführten Behälter haben, was Anspruch 7 löst,
b) eine variable Befestigung an unterschiedlichen Zweiradfahrzeugen ermöglichen, was Anspruch 8 löst,
c) einen sicheren Stand des abgestellten Zweiradfahrzeuges bewirken, was Anspruch 9 löst,
d) ein einfach aufgebautes, leicht zu handhabendes und sicheres Gurtschloß für verschiedene am Gepäckträger und Sitz angebrachte und festzulegende Sicherheitsgurte aufweisen, was die Merkmale der Ansprüche 11 bis 13 lösen,
e) ein mit einem Sicherungsseil im variablen Verlauf zur Diebstahlsicherung zusammenwirkendes Schloß gemäß Anspruch 10 und
f) einen einfach am Gepäckträger abnehmbar festlegbaren, das Kind gegen äußere Einflüsse sicher schützenden und dennoch mit dem Kindersitz eine gute Belüftung ergebenden Wetterschutz besitzen, was der Anspruch 14 löst.

Der erfindungsgemäße Gepäckträger bietet einerseits eine hohe Aufnahme- und Verstaukapazität für Gegenstände der ververschiedensten Art sowohl in seinem Hohlraum als auch auf seinem Deckel und ist andererseits in leichter Weise durch einfache Mittel in einen Kindersitz umwandelbar, wobei der Deckel als Sitzschale sicher gegenüber dem Behälter durch Stütz- und Auflagestellen, einen Sicherungsbeschlag und Spanngurte arretiert ist.

Die Belastungskräfte des Sitzes werden über die Stütz- und Auflagestellen sowie den Beschlag und die Gurte großflächig in den Behälter eingeleitet und verteilt.

Weiterhin ist der günstig angeordnete Ständer einfach und bequem in die jeweilige Stellung am Behälter schwenkbar gelagert, zeigt eine einfache Fixierung am Behälter in der Nichtgebrauchsstellung und eine äußerst günstige Abstützstellung in der Fahrzeugaufständerung und hierbei werden die Belastungskräfte ebenfalls großflächig und verteilt in die Behälter-Seitenwände eingeleitet.

Außerdem sind die Gurte mit einfachen, leicht zu handhabenden und äußerst sicheren Gurtschlösser (Gurtlaschen und diese eingesteckt aufnehmenden Beschlagteilen) ausgestattet und der Gepäckträger ist mit einem sicheren und zweckmäßigen Deckelschloß und abnehmbaren Wetterschutz ausgerüstet.

Auf den Zeichnungen ist ein Ausführungsbeispiel der Erfindung dargestellt, welches nachfolgend näher erläutert wird. Es zeigt:

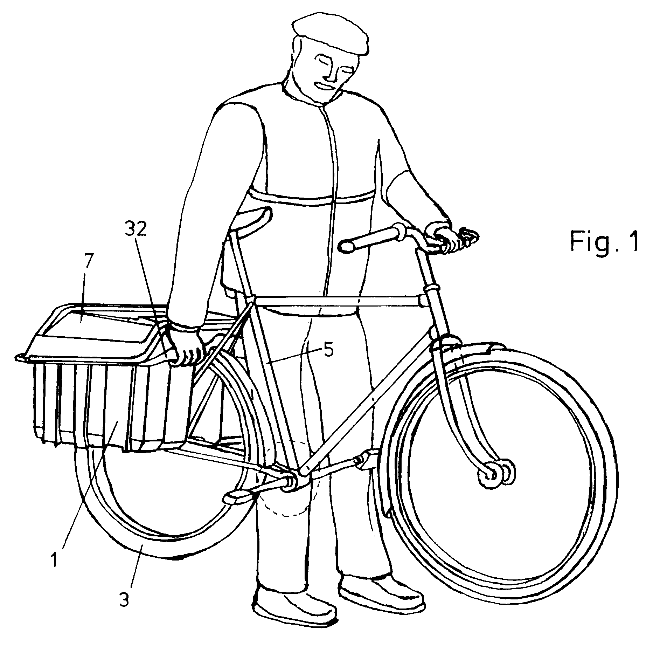

- Fig. 1: eine perspektivische Darstellung eines von einer Person getragenen Zweiradfahrzeuges mit Gepäckträger,
- Fig. 2: eine Seitenansicht des über dem Hinterrad am Fahrzeugrahmen festgelegten Gepäckträgers in der als Kindersitz umgewandelten Form,
- Fig. 3: eine perspektivische Darstellung des Gepäckträgers mit geschlossenem Deckel,
- Fig. 4: eine perspektivische Darstellung des Gepäckträgers mit zu einem Kindersitz hochgeschwenktem Deckel,
- Fig. 5: eine Seitenansicht eines Teilbereiches des geschlossenen Deckels des Gepäckträgers mit Führungsbeschlag zur Deckel-Schwenkung,
- Fig. 6: eine perspektivische Darstellung des teilweise aufgeschnittenen, aus Behälter und zum Kindersitz hochgeschwenkten Deckel bestehenden Gepäckträgers,
- Fig. 7: einen perspektivischen Ausschnitt des Behälters mit einem Teil des hochgeschwenkten Deckels, Deckel-Sicherungsbeschlag und Kinder-Sicherheitsgurt, Fuß-Stützgurt und Sicherungsgurt für den Sicherungsbeschlag,
- Fig. 8: einen Querschnitt durch den unteren Bereich einer Kammer mit Befestigungsstelle am Rahmen-Ausfallende und Ständer,
- Fig. 9: einen Querschnitt durch einen am Behälter außen angeordneten Rasthaken für einen Ständer, in der in den Rasthaken hineingeschwenkten Ständer-Stellung,
- Fig. 10: einen Querschnitt durch denselben Rasthaken bei gelöstem Ständer,
- Fig. 11: eine perspektivische Schnittdarstellung eines Gurtschlosses mit von unten eingesteckter Gurtlasche,
- Fig. 12: eine perspektivische Schnittdarstellung eines Gurtschlosses mit von oben eingesteckter Gurtlasche,
- Fig. 13: eine perspektivische Darstellung der Gurtlasche,
- Fig. 14: eine perspektivische Darstellung des die Gurtlasche aufnehmenden Beschlagteiles.

Der Gepäckträger für ein/an einem Zweiradfahrzeug weist einen Behälter (1) mit zwei beiderseits eines Radkastens (2) liegende, sich beiderseits eines Rades (3) erstreckende Kammern (4) auf und ist einerseits am Fahrzeugrahmen (5) befestigt und andererseits im Radnabenbereich abgestützt; die obenliegende Behälteröffnung (6) wird durch einen Deckel (7) verschlossen.

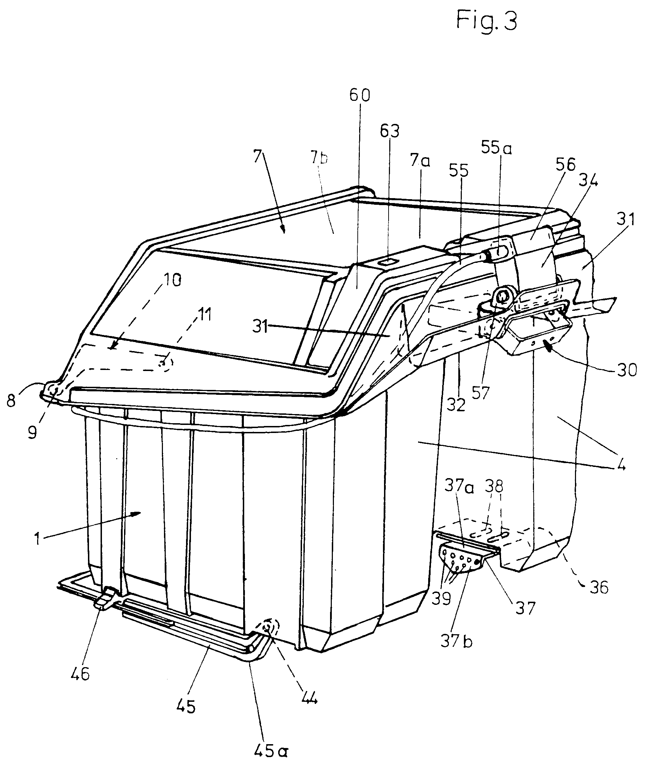

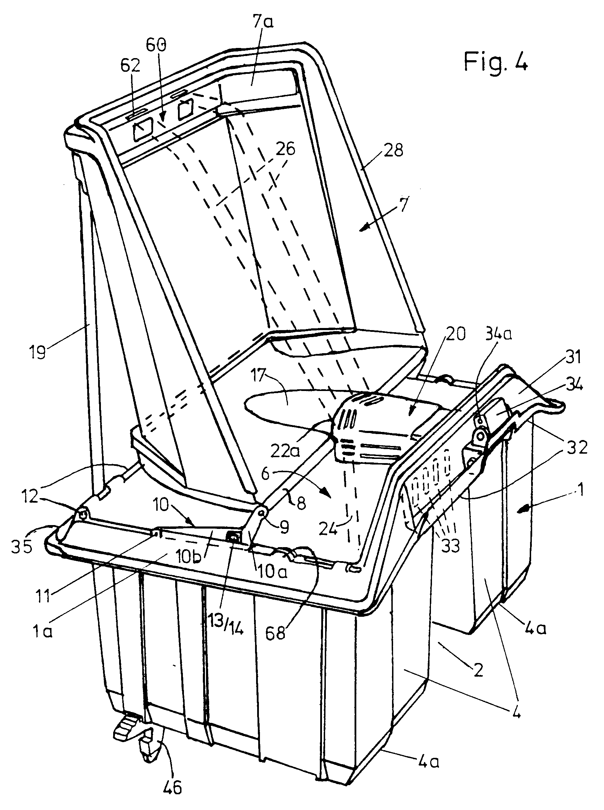

Dieser Deckel (7) ist als Sitzschale ausgebildet und mit einem Schalenrand (8) in einer waagerechten Schwenkachse (9) eines Führungsbeschlages (10) aus der Schließstellung (Fig. 3) in eine hochgestellte Öffnungsstellung (Fig. 4) schwenkbar gelagert und mit diesem Führungsbeschlag (10) um eine zweite waagerechte Schwenkachse (11) in der hochgestellten Stellung über die Behälteröffnung (6) auf den Radkasten (2) als Kindersitz schwenkbar und in dieser Stellung durch den Führungsbeschlag (10) und Radkasten (2) lagefixiert abgestützt.

Der Führungsbeschlag (10) wird in der geschlossenen Stellung des Deckels (7) durch eine Verriegelungsstange (12) für das Auf- und Zuklappen des Deckels (7) und in der hochgeschwenkten Sitzstellung des Deckels (7) durch Rastmittel (13/14) gegenüber dem Behälter (1) in seinen beiden verschwenkten Stellungen arretiert (Fig. 4 bis 6).

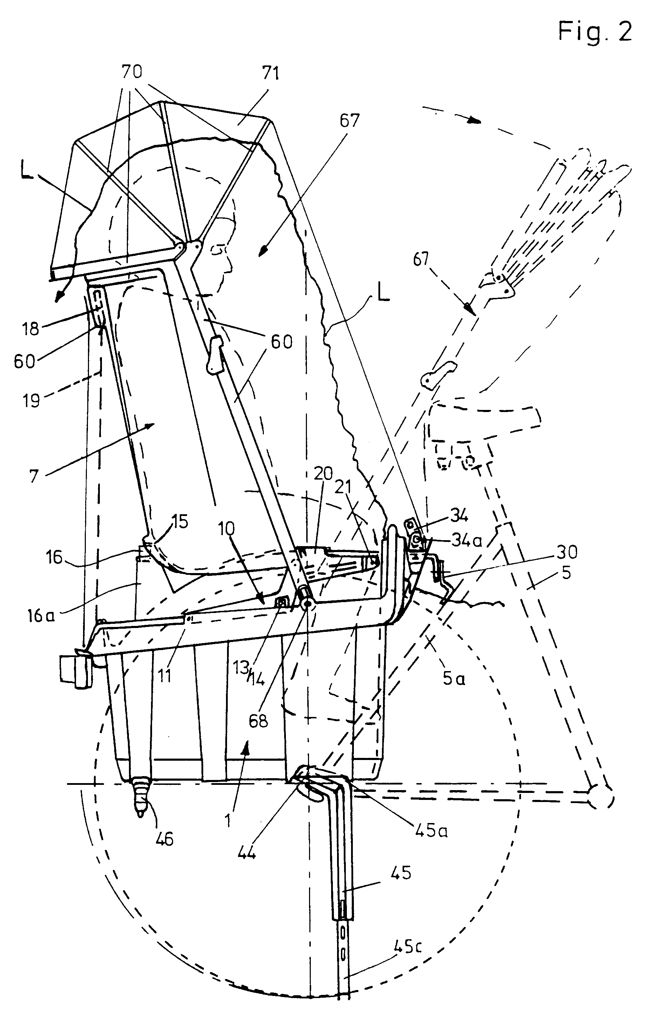

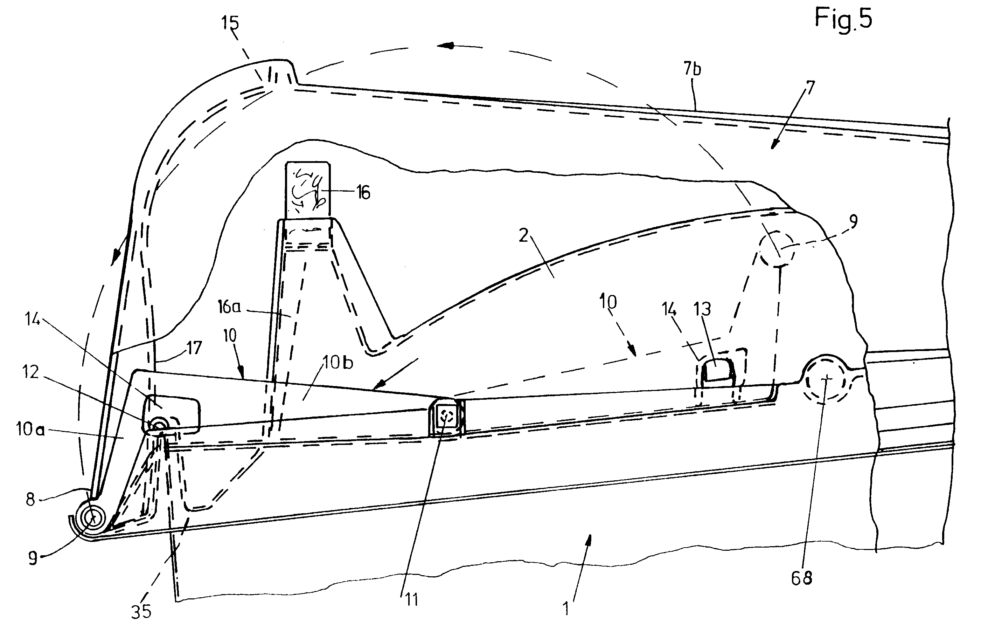

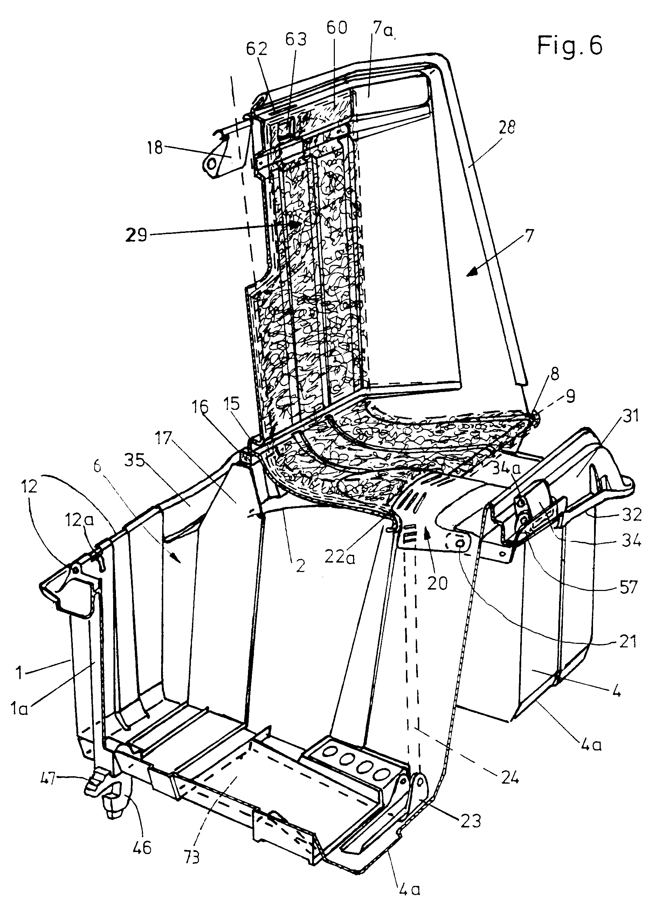

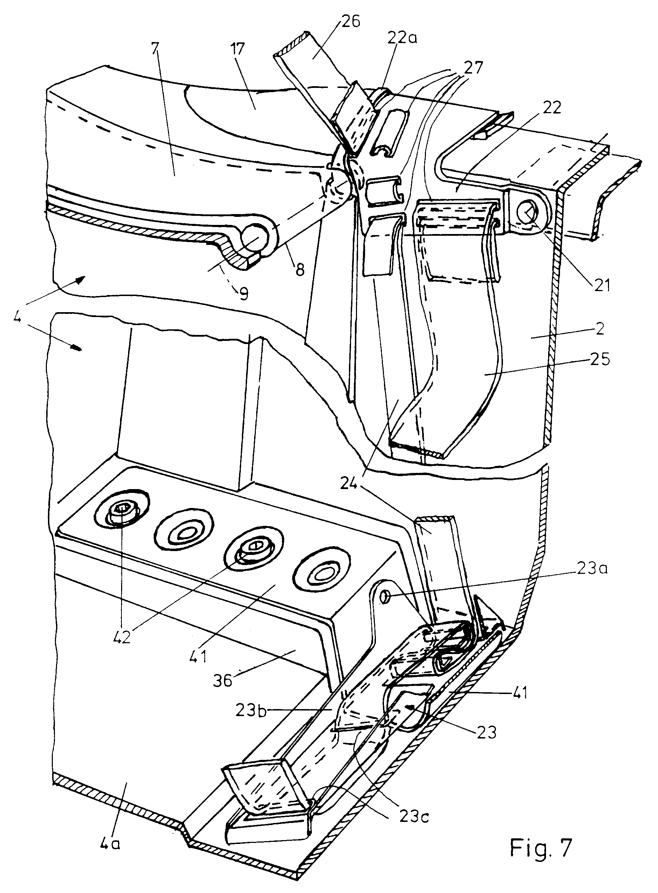

Der Führungsbeschlag (10) hat zwei seitliche Winkelhebel mit stumpfwinklig zueinanderstehenden und unterschiedlich langen Hebelschenkeln (10a, 10b), von denen der kürzere Hebelschenkel (10a) in seinem freien Ende die Schwenkachse (9) für den Deckel (7) aufnimmt und mit dem freien Ende des längeren Hebelschenkels (10b) in der zweite Schwenkachse (11) im oberen Seitenrand des Behälters (1) schwenkbar gelagert ist. Im Stoßbereich der beiden Hebelschenkel (10a, 10b) liegt eine Aussparung (14), in die in einer Stellung die verschiebbare durch mindestens einen Sicherungshebel (12a) (Fig. 6) in beiden verschobenen Stellungen gesicherte Verriegelungsstange (12) eingreift und in der zweiten Stellung am Behälter (1) angeformte Rastnasen (13) einfassen (Fig. 5). Der Deckel (7) stützt sich gemäß Fig. 4 bis 6 in der Sitzstellung mit einer rücklehnenseitigen Ausformung (15) auf einem flexibeln und/oder elastischen von einer Ausformung (16a) des Radkastens (2) getragenen Stützklotz (16) und mit einer sitzflächenseitigen Ausformung (17) auf dem Radkasten (2) ab; durch zwei äußere, unter dem Boden (4a) der Kammern (4) mit einem Ende befestigte und mit Gurtlaschen (18) in am oberen Rückenlehnenrand (7a) des Deckels (7) festgelegte Beschlagteile (60) lösbar einsetzbare Spanngurte (19) sowie einen am Radkasten (2) schwenkbar gelagerten, den sitzflächenseitigen Rand (8) übergreifenden Sicherungsbeschlag (20) ist der in die Sitzstellung (4) hochgeschwenkte Deckel (7) gegenüber dem Behälter (1) lagearretiert (Fig. 2, 4). Der aus Fig. 2, 4, 6 und 7 erkennbare Sicherungsbeschlag (20) ist als ein U-förmiger, um eine waagerechte Achse (21) am Radkasten (2) höhenverschwenkbarer Kipphebel (22) mit am freien Hebelende angeformter, auf dem Sitzrand (8) einwirkende Sicherungsnase (22a) ausgebildet. An dem Kipphebel (22) sind erstens zwei seitliche, in auf dem Kammerboden (4a) festgelegte Gurtschnallen (23) lösbar einsetzbare Sicherungsgurte (24) des Beschlages (20) in seiner auf den Sitzrand (8) abgeschwenkten Stellung, zweitens zwei seitliche, in den äußeren Behälter-Seitenwandungen befestigte Fußstützgurte (25) und drittens zwei parallel oder über Kreuz zu am oberen Rückenlehnenrand (7a) des Deckels (7) angeordneten Gurtbeschlagteile (60) geführte und darin mit Gurtlaschen (18) einsetzbare Sicherheitsgurte (26) für das aufgenommene Kind festgelegt. Diese Gurte (24,25,26) für ihre drei Funktionen sind jeweils mit einem Längenende durch Schlitze (27) des Kipphebels (22) mehrfach geschlungen und somit längenänderbar festgelegt (Fig. 7).

Jedes Beschlagteil (60) und die damit zusammenwirkende, lösbar darin einsetzbare Gurtlasche (18) bilden Gegenstücke eines Gurtschlosses. Die Gurtschnalle (23) des Beschlag-Sicherheitsgurtes (24) ist als Spannschloß ausgeführt und weist einen um eine Achse (23a) schwenkbaren Spannhebel (23b) auf, in den durch Schlitze (23c) das Gurtende mehrfach eingeschlauft ist. Der Spannhebel (23b) mit Gurt (24) wird um seine Achse (23a) über eine Totpunktlage hinaus in die Spannstellung gebracht (Fig. 7).

Um den Rand des Deckels (7) ist bis auf den Sitzrand (8) ein Dichtungsprofil (28) angeordnet und in der Sitzschale (7) eine Polstermatte (29) herausnehmbar eingelegt, welche zwischen Radkasten (2) und Sicherungsbeschlag (20) und Sicherungsnase (22a) unter Vermeidung von Verletzungsstellen und zur Bildung eines glatten Überganges zum Sicherungsbeschlag (20) eingeklemmt festgelegt ist. (Fig.6).

Der Behälter (1) hat an seiner der Rahmenbefestigung benachbarten Seite eine hochgezogene vordere Querbrücke (31), die Tragegriffe (32), Lüftungsschlitze (33) und eine Befestigungsstelle (30) am Rahmen (5) und für ein Schloß (34) und weist an seiner gegenüberliegenden Seite eine tieferliegende hintere Querbrücke (35) auf, auf der in der geschlossenen Stellung der Deckel (7) mit seinem die Achse (9) zeigenden Sitzrand (8) abgestützt ist (Fig. 3 bis 6).

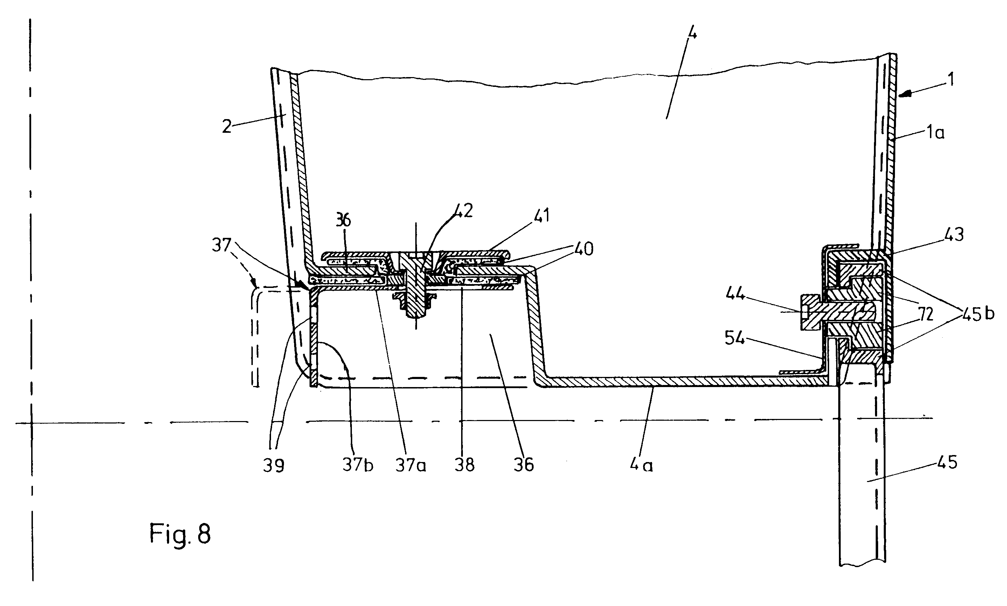

In einer Einbuchtung (36) des Bodens (4a) beider Kammern (4) ist je ein Befestigungswinkel (37) für die Befestigung des Behälters (1) am Ausfallende des Fahrzeugrahmens (5) angeordnet, der mit seinem waagerechten, unter der Ausbuchtung (36) liegenden Schenkel (37a) mittels eines Langloches (38) und darin eingreifender Befestigungsschraube (42) in Naben-Achsrichtung zum Ausgleich unterschiedlicher Achslängen stufenlos verstellbar ist und in seinem senkrecht nach unten gerichteten Schenkel (37b) mehrere Durchstecklöcher (39) für eine Befestigungsschraube am Ausfallende hat (Fig. 3 und 8). Die Löcher (39) im senkrechten Schenkel (37b) ergeben ein Lochbild zur Befestigung an verschiedenen Ausfallenden.

Wie Fig. 8 zeigt, ist der Befestigungswinkel (37) in der Ausformung (36) mit seinem waagerechten Schenkel (37a) unter Zwischenschaltung von Dämpfungsschichten (40) beiderseits der Ausformungswandung (36a) und einer großflächigen Gegenplatte (41) mittels der Schraube (42) unter Bildung einer großflächigen Kräfteverteilung festgelegt.

An dieser Gegenplatte (41) läßt sich gleichzeitig der Spannhebel (23b) des Beschlag-Sicherungsgurtes (24) lagern.

In einer bodenseitigen Ausformung (43) der beiden Behälter-Seitenwände (1a) ist um eine koaxial zur Radachse verlaufenden Achse (44) ein U-bügelförmiger Ständer (45) klappbar gelagert, der im Anschluß an seine Schwenkachse (44) eine Abwinklung (45a) hat, die in der heruntergeschwenkten Ständerstellung (Radaufständerung) den Ständer (45) mit Abstand vor der Radachse hält und sich in der Ausformung (43) abstützt und in der hochgeschwenkten Nichtgebrauchsstellung hinter einem am Behälter (1) federnd gelagerten Rasthaken (46) mit Fußbetätigungsansatz (47) einfaßt (Fig. 2, 3 und 8).

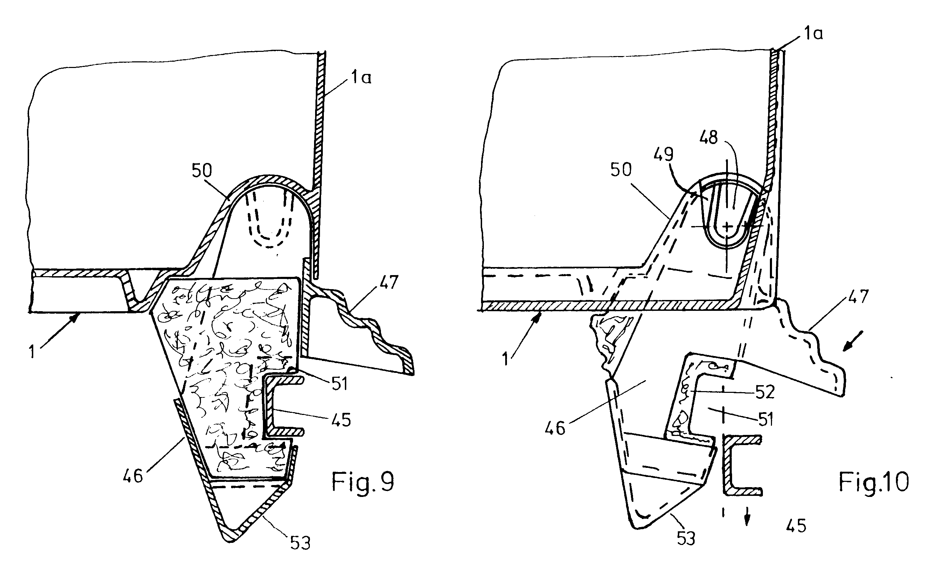

Der Rasthaken (46) mit Fußbetätigungsansatz (47) ist von einem einstückigen Kunststoffteil gebildet, welches mit einer Rastnase (48) in eine Aussparung (49) einer Ausformung (50) des Behälters (1) eingerastet ist und um diese Rastverbindung (48,49) in einem gewissen Bereich schwenkbar und federnd gehalten ist. Der Rasthaken (46) ist mindestens in seiner den Ständer (45) aufnehmenden Rastnut (51) mit einer Dämpfungsschicht (52), wie Gummiteil, ausgekleidet. Eine am Rasthaken (46) angeformte Auflaufschräge (53) ermöglicht ein leichtes Einrasten des Ständers (45) in die Rastnut (51), in dem der hochschwenkende Ständer (45) über die Schräge (53) den Rasthaken (46) zurückdrückt, der dann durch seine schwenkbare und federnde Ausführung automatisch über den in die Rastnut (51) eingeschwenkten Ständer (45) zurückschwenkt (Fig. 9).

Zum Lösen und Herunterklappen des Ständers (45) wird auf den Ansatz (47) mit dem Fuß ein Druck ausgeübt, wodurch der Rasthaken (46) wiederum zurückgedrückt wird und den Ständer (45) in seiner Rastnut (51) freigibt (Fig. 10).

Wie aus Fig. 8 ersichtlich, ist in dem Ständer-Lagerauge (45b) ein Gleitstück (72) eingesetzt, in das die Schraube (44) eingreift und um das der Ständer (45) großflächig und die auftretenden Kräfte auffangen, drehbar und seitengeführt gelagert ist.

Ein sich über die Ausformung (43) und auf dem Kammerboden (4a) erstreckender Blechwinkel, der von der Schraube (44) durchfaßt und an die Ausformung (43) angepreßt wird, verteilt die Belastungskräfte großflächig.
Der Ständer (45) ist in sich stufenlos höhenverstellbar ausgebildet, in dem sein unterer U-Bügel (45 c) gegenüber den schwenkachsenseitigen Ständerteilen (45, 45 a) verschiebbar und durch Schrauben, Steckbolzen, Klemmteile od. dgl. arretierbar ist (Fig. 2).

Das Schloß (34), was in Fig. 3, 4 und 6 ersichtlich ist, ist von einem Sicherheitsschloß mit einem Einsteckkanal (34 a) für einen endseitigen Sicherungsstift (55a) eines Sicherungsseiles (55) gebildet, wobei der Sicherungsstift (55a) gleichzeitig eine Schloßklappe (56) des Deckels (7) durchfaßt.

Dieses Schloß (34) lagert schwenkbar in einem an der vorderen Querbrücke (31) befestigten, U-förmigen Lagerbügel (57). In der geschlossenen Stellung des Deckels (7) ist dessen Schloßklappe (56) über das Schloß (34) gesteckt und der Sicherungsstift (55a) greift dann seitlich durch die Schloßklappe (56) und seitlich in das Schloß (34) ein und dann wird der Sicherungsstift (55a) durch Abschließen des Schloßes (34) festgesetzt. Das Sicherungsseil (55) hat eine beliebig große Länge und läßt sich wahlweise um den Gepäckträger und um und durch das Fahrrad, um einen Festpunkt (Baum, Schilderpfahl od. dgl.) zur Sicherung schlingen. Das dem Sicherungsstift (55a) abgewandte Seilende ist unter dem Radkasten (2) hindurchgeführt und darunter von außen nicht zugänglich befestigt.

An der vorderen Querbrücke (31) ist unter der Schloßlagerung (57) ein Befestigungswinkel (30) zur Befestigung des Behälters (1) mittels Schrauben o. dgl. am Rahmen (5), vorzugsweise am schräg nach unten zur Radnabe und Ausfallende verlaufenden Rahmenrohr (5a) befestigt.

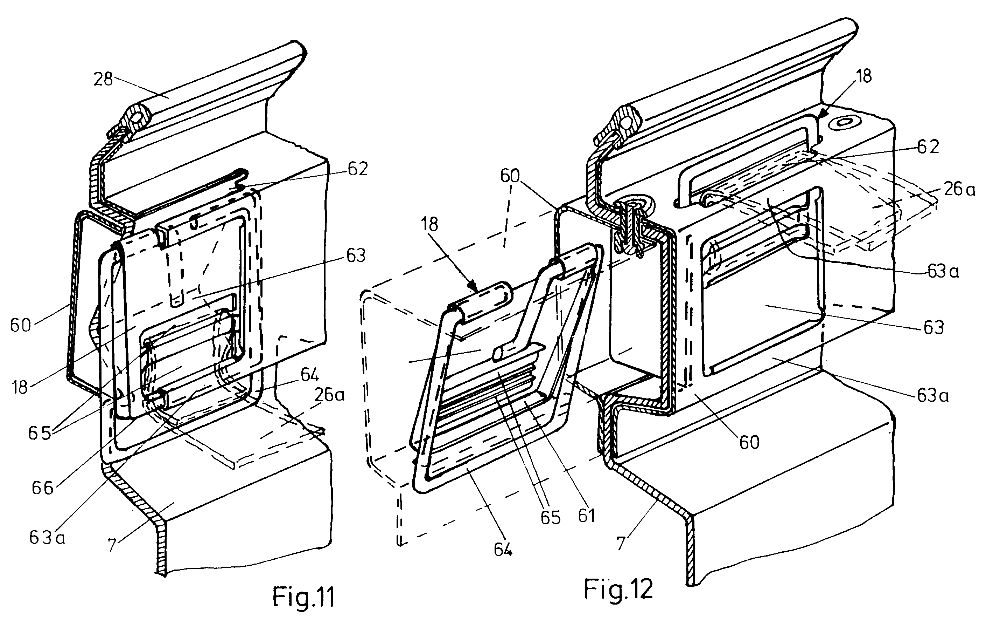

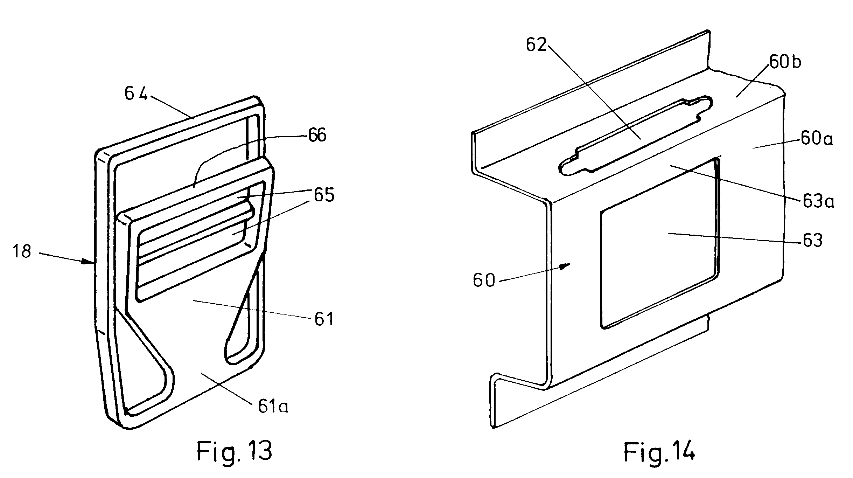

Das Gurtschloß (18, 60) gemäß Fig. 11 bis 14 besteht aus einer Gurtlasche (18) mit federndem Halte- und Rastteil (61) für das Gurtende (26a) und einem Beschlagteil (60) mit Einstecköffnung (62) für die Gurtlasche (18) und einer Aussparung (63), welche eine Rastkante (63a) für das Halte- und Rastteil (61) und eine Betätigungsöffnung für das Lösen des Halte- und Rastteiles (61) bildet.

Die Gurtlasche (18) ist einteilig aus Metall oder Kunststoff ausgeführt und weist in einem Rahmenteil (64) das damit federnd verbundene Halte- und Rastteil (61) auf, welches mehrere Durchführschlitze (65) für das Gurtende (26 a) und eine Rastkante (66) hat und aus der Ebene des Rahmenteiles (64) schräg heraussteht und in das Rahmenteil (64) zur Lösung der Gurtlasche (18) aus dem Beschlagteil (60) hineinbewegbar ist.

Das Beschlagteil (60) ist von einem flachen U-förmigen Profil aus Blech oder Kunststoff gebildet, in dessen U-Steg (60a) die Betätigungsöffnung (63) und in einem U-Schenkel (60b) die Einstecköffnung (62) in Schlitzform ausgespart sind; der zwischen Betätigungsöffnung (63) und Einstecköffnung (62) vorhandene Profilsteg ergibt die Rastkante (63a) für das Rast- und Halteteil (61). Das Beschlagteil (60) ist, wie Fig. 4 zeigt, bis in die Seitenwände der Sitzschale (7) verlängert, wodurch es eine Versteifung des Deckels (7) ergibt und diesen gegen im Seitenbereich mögliches Hochbiegen, Beschädigen und somit Diebstahl sichert.

Die Gurtlasche (18) mit dem mehrfach durch die Schlitze (65) geschlungenen Gurtende (26a) wird von unten oder oben in die schlitzförmige Einstecköffnung (62) des Beschlagteiles (60) eingesteckt und dabei das herausstehende Halte- und Rastteil (61) um seinen federnden Verbindungssteg (61a) zum Rahmenteil (64) in das Rahmenteil (64) hineingedrückt.
Ist die Gurtlasche (18) eingesteckt, dann federt das Kalte- und Rastteil (61) automatisch in die Öffnung (63) des Beschlagteiles (60) hinein und seine Rastkante (66) legt sich vor die Rastkante (63a) des Beschlagteiles (60) und die eingesteckte Gurtlasche (18) ist auch bei hoher Zugbelastung auf den Gurt (26) sicher im Beschlagteil (60) gehalten.

Zum Lösen des Gurtschlosses wird auf das Halte- und Rastteil (61) ein Druck von Hand ausgeübt, dieses in das Rahmenteil (64) hineingedrückt und damit über den Federbereich (61a) von der Rastkante (63a) weggedrückt, so daß dann die Gurtlasche (18) aus dem Schlitz (62) des Beschlagteiles (60) herausgezogen werden kann.

An dem Behälter (1) und dem in die Sitzstellung geschwenkten Deckel (7) ist ein zusammenfaltbarer Wetterschutz (67) abnehmbar festlegbar, welcher zwei in angeformte Schwenklager (68) die Behälter-Seitenwandungen (1a) schwenkbar einrastbare in sich zusammenklappbare Seitengestänge (69), daran schwenkbar gelagerte und aufspannbare Tragstreben (70) und eine an den Tragstreben (70) befestigte und bis zur vorderen Brücke (31) heruntergeführte, flexible Verdeckfolie (71) aufweist, die mit den in der Brücke (31) vorgesehen Lüftungsschlitzen (33) und der oberen Rückenlehnenkante (7a) eine durchgehende Luftführung (L) bildet.

Unter der oder den Kammern (4) läßt sich eine Aussparung (73) vorsehen, in die ein nicht dargestellter Batteriekasten lösbar einsetzbar ist.

Der Deckel (7) kann außenseitig eine ebene Abstellfläche (7b) haben (vgl. Fig. 3) auf die Gegenstände, wie Bier- und Sprudelkästen, abgestellt und durch Spanngurte beim Transport gesichert werden können.

Zum Umwandeln des Gepäckträgers in einen Kindersitz wird das Schloß (34) geöffnet und der Deckel (7) an seinem vorderen Rand erfaßt und um die waagrechte Achse (9) nach oben hochgeschwenkt, so daß er dann an der hinteren Querbrücke (35) schräg nach oben und vorn steht.

Dann wird der Deckel (7) mit dem Führungsbeschlag (10) um die waagerechte (11) nach vorn (zur vorderen Querbrücke (31) hin) auf einen Kreisbogen (vgl. strich-punktierter Bogen in Fig. 5) geschwenkt, so daß er dann als aufrechte Sitzschale gem. Fig. 4 auf dem Radkasten (2) und dem hinteren Gummipuffer (16) sich abstützt. Nun wird der Sicherungsbeschlag (20) heruntergeklappt und durch die Gurte (24) mittels der Spannschnallen (23) gesichert.

Dann kann das Kind in die Sitzschale (7) hineingesetzt und durch die Gurte (26) gesichert werden. Die Fußstützgurte (25) erhalten ihre Abstützlage beim Schließen des Beschlages (20) und das Kind kann seine Füße auf die dann schlaufenbildenden Gurte (25) abstellen.

## Patentansprüche

1. Gepäckträger für ein Zweiradfahrzeug, der einen Behälter (1) mit zwei nach oben offenen Kammern (4) aufweist, wobei zwischen den beiden Kammern (4) ein als Radkasten (2) ausgebildeter Freiraum zum Übergreifen eines Rades (3) des Zweiradfahrzeuges für die Montage des Gepäckträgers am Rahmen und für die Abstützung im Radnabenbereich des Zweiradfahrzeuges vorhanden ist und auf dem Behälter (1) ein Deckel (7) beweglich gelagert ist, der in eine die Kammern (4) des Behälters (1) überdeckende, liegende Schließstellung und in eine die Kammern (4) teilweise freigebende und eine Sitzschale (7) bildende hochgestellte Sitzstellung bringbar ist, dadurch gekennzeichnet, daß die Sitzschale (7) mit einem Schalenrand (8) in einer waagerechten Schwenkachse (9) an einen Führungsbeschlag (10) gelagert und am Führungsbeschlag (10) aus der Schließstellung in eine hochgestellte Öffnungsstellung schwenkbar ist und der Führungsbeschlag (10) in einer weiteren waagerechten Schwenkachse (11) an dem Behälter (1) schwenkbar lagert und dieser Führungsbeschlag (10) mit der Sitzschale (7) in der hochgestellten Stellung über die Behälteröffnung (6) auf den Radkasten (2) als Kindersitz schwenkbar und die Sitzschale (7) in dieser Stellung durch den Führungsbeschlag (10) und den Radkasten (2) lagefixiert auf dem Behälter (1) abgestützt ist.

2. Gepäckträger nach Anspruch 1, dadurch gekennzeichnet, daß der Führungsbeschlag (10) in der geschlossenen Stellung des Deckels (7) durch eine Verriegelungsstange (12) für das Auf- und Zuklappen des Deckels (7) und in der hochgeschwenkten Sitzstellung des Deckels (7) durch Rastmittel (13,14) gegenüber dem Behälter (1) in seinen beiden verschwenkten Stellungen arretiert ist.

3. Gepäckträger nach Anspruch 1 und 2, dadurch gekennzeichnet, daß der Führungsbeschlag (10) zwei seitliche Winkelhebel mit stumpfwinklig zueinanderstehenden und unterschiedlich langen Hebelschenkeln (10a, 10b) aufweist, von denen der kürzere Hebelschenkel (10a) in seinem freien Ende die Schwenkachse (9) für den Deckel (7) zeigt, der längere Hebelschenkel (10b) mit seinem freien Ende in der zweiten Schwenkachse (11) im oberen Seitenrand des Behälters (1) schwenkbar gelagert ist und im Stoßbereich der beiden Hebelschenkel (10a, 10 b) eine Aussparung (14) vorgesehen ist, in die in einer Stellung die verschiebbare, durch mindestens einen Sicherungshebel (12a) in beiden verschobenen Stellungen gesicherte Verriegelungsstange (12) eingreift und in der zweiten Stellung am Behälter (1) angeformte Rastnasen (14) einfassen (Fig. 4 bis 6).

4. Gepäckträger nach einem der Ansprüche 1 bis 3, dadurch gekennzeichnet, daß der Deckel (7) in der Sitzstellung sich mit einer rückenlehnenseitigen Ausformung (15) auf einem flexiblen und/oder elastischen von einer Ausformung (16a) des Radkastens (2) getragenen Stützklotz (16) und mit einer sitzflächenseitigen Ausformung (17) auf dem Radkasten (2) abstützt und
durch zwei äußere, unter dem Boden (4a) der Kammern (4) befestigte und in am oberen Rückenlehnenrand (7a) des Deckels (7) festgelegte Gurtschloß-Beschlagteile (60) lösbar einsetzbare Spanngurte (19) sowie einen am Radkasten (2) schwenkbar gelagerten, den sitzflächenseitigen Rand (8) übergreifenden
Sicherungsbeschlag (20) lagefixiert ist (Fig. 2, 4).

5. Gepäckträger nach einem der Ansprüche 1 bis 4, dadurch gekennzeichnet, daß der Sicherungsbeschlag (20) als ein U-förmiger, um eine waagerechte Achse (21) am Radkasten (2) höhenverschwenkbarer Kipphebel (22) mit am freien Hebelende angeformter, auf den Sitzrand (8) einwirkender Sicherungsnase (22a) gebildet ist, an dem zwei seitliche, in auf dem Kammerboden (4a) festgelegte Gurtschloß-Schnallen (23) lösbar einsetzbare Sicherungsgurte (24) zur Sicherung des Beschlages (20) in seiner auf den Sitzrand (8) abgeschwenkten Stellung, zwei seitliche, in den Behälter-Seitenwandungen (1a) befestigte Fußstützgurte (25) und zwei parallel oder überkreuz zu am oberen Rückenlehnenrand (7a) des Deckels (7) angeordnete Gurtschloß-Beschlagteile (60) geführte Sicherheitsgurte (26) für das aufgenommene Kind festgelegt sind (Fig. 4, 6, 7).

6. Gepäckträger nach einem der Ansprüche 1 bis 5, dadurch gekennzeichnet, daß um den Rand des Deckels (7) bis auf den Sitzrand (8) ein Dichtungsprofil (28) angeordnet und in der Sitzschale (7) eine Polstermatte (29) herausnehmbar eingelegt ist, welche zwischen Radkasten (2) und Sicherungsnase (22a) des Sicherungsbeschlages (20) unter Vermeidung von Verletzungsstellen und zur Bildung eines glatten Überganges zum Sicherungsbeschlag (20) eingeklemmt festgelegt ist (Fig. 6).

7. Gepäckträger nach einem der Ansprüche 1 bis 6, dadurch gekennzeichnet, daß der Behälter (1) an seiner der Rahmenbefestigung benachbarten Seite eine hochgezogene vordere Querbrücke (31) aufweist, die Tragegriffe (32), Lüftungschlitze (33) und eine Befestigungsstelle (30) für die Behälterbefestigung am Fahrzeugrahmen (5) und für ein Schloß (34) besitzt und an seiner gegenüberliegenden Seite eine tieferliegende hintere Querbrücke (35) zeigt, auf der in der geschlossenen Stellung der Deckel (7) mit seinem die Achse (9) zeigenden Sitzrand (8) abgestützt ist (Fig. 3 bis 6).

8. Gepäckträger nach einem der Ansprüche 1 bis 7, dadurch gekennzeichnet, daß in einer Einbuchtung (36) des Bodens (4a) beider Kammern (4) je ein Befestigungswinkel (37) für die Befestigung des Behälters (1) am Ausfallende des Fahrzeugrahmens (5) angeordnet ist, der mit seinem waagerechten, unter der Ausbuchtung (36) liegenden Schenkel (37a) mittels Langloch (38) und darin eingreifende Befestigungsschraube (42) in Naben-Achsrichtung zum Ausgleich unterschiedlicher Achslängen stufenlos verstellbar ist und in seinem senkrecht nach unten gerichteten Schenkel (37b) mehrere Durchstecklöcher (39) für eine Befestigungsschraube (42) am Ausfallende hat (Fig. 3 und 8).

9. Gepäckträger nach einem der Ansprüche 1 bis 8, dadurch gekennzeichnet, daß in einer bodenseitigen Ausformung (43) der beiden Behälter-Seitenwände (19) um eine koaxial zur Radachse verlaufende Achse (44) ein U-bügelförmiger, in sich höhenverstellbarer Ständer (45) klappbar gelagert ist, der im Anschluß an seine Schwenkachse (44) eine Abwinklung (45a) hat, die in der heruntergeschwenkten Ständerstellung (Radaufständerung) den Ständer (45) mit Abstand vor der Radachse hält und sich in der Ausformung (43) abstützt und in der hochgeschwenkten Nichtgebrauchsstellung hinter einem am Behälter (1) federnd gelagerten Rasthaken (46) mit Fußbetätigungsansatz (45) einfaßt (Fig. 2, 3 und 8).

10. Gepäckträger nach einem der Ansprüche 1 bis 9, dadurch gekennzeichnet, daß das Schloß (34) von einem Sicherheitsschloß mit einem Einsteckkanal (34a) für einen endseitigen Sicherungsstift (55a) eines Sicherungsseiles (55) gebildet ist, wobei der Sicherungsstift (55a) gleichzeitig die Schloßklappe (56) des Deckels (7) durchfaßt (Fig. 3,4 und 6).

11. Gepäckträger nach einem der Ansprüche 1 bis 10, dadurch gekennzeichnet, daß das Gurtschloß (18,60) aus einer Gurtlasche mit federndem Halte- und Rastteil (61) für das Gurtende (26 a) und einem Beschlagteil (60) mit Einstecköffnung (62) für die Gurtlasche (18) und einer Aussparung (63), welche eine stegartige Rastkante (63a) für das Kalte- und Rastteil (61) und eine Betätigungsöffnung für das Lösen des Halte- und Rastteiles (61) bildet, gebildet ist (Fig. 11 bis 14).

12. Gepäckträger nach Anspruch 11, dadurch gekennzeichnet, daß die Gurtlasche (18) zweiteilig aus Metall oder einteilig aus Kunststoff besteht, in einem Rahmenteil (64) das damit durch einen federnden Steg (61a) elastisch verbindende Halte- und Rastteil (61) aufweist, welches mehrere Durchführschlitze (65) für das Gurtende (26a) und eine Rastkante (63a) hat und aus der Ebene des Rahmenteiles (64) schrägt heraussteht und in das Rahmenteil (64) zur Lösung der Gurtlasche (18) aus dem Beschlagteil (60) bewegbar ist (Fig. 13).

13. Gepäckträger nach Anspruch 11 und 12, dadurch gekennzeichnet, daß das Gurtschloß-Beschlagteil (60) von einem flachen U-förmigen Profil gebildet ist, in dessen U-Steg (60a) die Betätigungsöffnung (63) und in einem U-Schenkel (60b) die Einstecköffnung (62) in Schlitzform ausgespart sind und der zwischen Betätigungsöffnung (63) und Einstecköffnung (62) vorhandene Profilsteg die Rastkante (63a) für das Rast- und Halteteil (61) ergibt (Fig. 14).

14. Gepäckträger nach einem der Ansprüche 1 bis 13, dadurch gekennzeichnet, daß an dem Behälter (1) und dem in die Sitzstellung geschwenkten Deckel (7) ein zusammenfaltbarer Wetterschutz (67) abnehmbar festlegbar ist, welcher zwei in angeformte Schwenklager (68) der Behälter-Seitenwandungen (1a) schwenkbar einrastbare in sich zusammenklappbare Seitengestänge (69), daran schwenkbar gelagerte und aufspannbare Tragstreben (70) und eine an den Tragstreben (70) befestigte und bis zur vorderen Brücke (31) heruntergeführte, flexible Verdeckfolie (71) aufweist, die mit den in der Brücke (31) vorgesehenen Lüftungsschlitzen (33) und der dessen Rückenlehnenkante (7a) eine durchgehende Luftführung (L) bildet (Fig. 2).

15. Gepäckträger nach einem der Ansprüche 1 bis 14, dadurch gekennzeichnet, daß der Deckel (7) an seiner Außenseite eine ebene Abstellfläche (7b) für zu transportierende Gegenstände aufweist (Fig. 3).

## Claims

1. Luggage carrier for a two-wheeled vehicle, incorporating a container (1) with two upwardly open compartments (4), there being disposed between the two compartments (4) a space developed as a wheel guard (2) for fitting over a wheel (3) of the two-wheeled vehicle in order to mount the luggage carrier to the frame and for support in the wheel hub region of the two-wheeled vehicle, and there being movably mounted on the container (1) a lid (7) which can be moved into a horizontal closed position so as to cover the compartments (4) of the container (1) and into an upright seat position partly uncovering the compartments (4) and forming a seat shell (7),
characterised in that the seat shell (7) is mounted by one shell rim (8) in a horizontal swivel axle (9) onto a guide fixture (10) and is adapted to swivel on the guide fixture (10) out of the closed position into an upright open position, and the guide fixture (10) is swivel-mounted in a further horizontal swivel axle (11) on the container (1), and in the upright position said guide fixture (10) is adapted to swivel with the seat shell (7) via the container opening (6) onto the wheel guard (2) to form a child seat and in this position the seat shell (7) is supported in a positionally fixed manner on the container (1) by the guide fixture (10) and the wheel guard (2).

2. Luggage carrier according to claim 1, characterised in that when the lid (7) is in the closed position, the guide fixture (10) is retained by a locking bar (12) for opening and shutting the lid (7), and when the lid (7) is in the upright sitting position the guide fixture (10) is retained by locking means (13, 14) relative to the container (1) in both its swivelled positions.

3. Luggage carrier according to claims 1 and 2, characterised in that the guide fixture (10) features two lateral angular levers with lever arms (10a, 10b) of different length which are obtusely angled relative to one another, the shorter lever arm (10a) having in its free end the swivel axle (9) for the lid (7), and the longer lever arm (10b) being swivel-mounted by its free end in the second swivel axle (11) in the upper side rim of the container (1), and there being provided in the abutment region of the two lever arms (10a, 10b) a recess (14) into which in one position there engages the displaceable locking bar (12) secured in both displaced positions by at least one securing lever (12a), and into which in the second position there locate locking lugs (14) moulded on the container (1) (Figs. 4 to 6).

4. Luggage carrier according to any of claims 1 to 3, characterised in that in the sitting position the lid (7) is supported, by a recess (15) on the backrest side, on a flexible and/or elastic support block (16) carried by a well (16a) in the wheel guard (2), and on the wheel guard (2) by a well (17) incorporated on the seat-surface side, and is fixed in position by two external tensioning straps (19) fastened beneath the floor (4a) of the compartments (4) and adapted to be releasably inserted in belt buckle fittings (60) located on the upper backrest edge (7a) of the lid (7), as well as by a securing fixture (20) swivel-mounted on the wheel guard (2) and fitting over the edge (8) on the seat-surface side (Figs. 2 and 4).

5. Luggage carrier according to any of claims 1 to 4, characterised in that the securing fixture (20) is in the form of a U-shaped tipper lever (22) moulded around a horizontal shaft (21) and adapted to swivel up and down on the wheel guard (2), with a securing lug (22a) moulded on the free lever end and operating on the seat rim (8), to which are fixed two lateral securing straps (24) adapted to be releasably inserted into belt buckle clasps (23) located on the compartment floor (4a) to secure the fixture (20) in its position swivelled away onto the seat rim (8), two lateral foot support straps (25) fastened in the container's side walls (1a), and two safety straps (26) for the child being accommodated, which are set parallel or crosswise to belt buckle fittings (60) disposed on the upper backrest edge (7a) of the lid (7) (Figs. 4, 6 and 7).

6. Luggage carrier according to any of claims 1 to 5, characterised in that disposed around the rim of the lid (7) as far as the seat rim (8) is a sealing profile (28) and laid in removable manner in the seat shell (7) is an upholstered mat (29) which is wedged in place between the wheel guard (2) and the securing lug (22a) of the securing fixture (20) so as to avoid sites of injury and in order to form a smooth interface with the securing fixture (20) (Fig. 6).

7. Luggage carrier according to any of claims 1 to 6, characterised in that on its side nearest the frame fixing, the container (1) has a raised front transverse bridge (31) which features carrying handles (32), ventilation slots (33) and a fastening point (30) for fastening the container to the vehicle frame (5) and for a lock (34), and on its opposing side has a lower, rear transverse bridge (35) on which the lid (7) is supported in the closed position by its seat rim (8) pointing towards the axle (9) (Figs. 3 to 6).

8. Luggage carrier according to any of claims 1 to 7, characterised in that in a bay (36) in the floor (4a) of each of the two compartments (4) is a fixing bracket (37) for fixing the container (1) at the emergent end of the vehicle frame (5), which is adapted to be continuously adjusted, in the direction of the hub axle to compensate for different axle lengths, by its horizontal side-piece (37a) situated below the bay (36) by means of a slot (38) and fixing screw (42) engaging therein, and which in its vertically downwardly directed side-piece (37b) has at the emergent end a plurality of through-holes (39) for a fixing screw (42) (Figs. 3 and 8).

9. Luggage carrier according to any of claims 1 to 8, characterised in that in a floor-side well (43) in the two container side walls (19) a U-stirrup-shaped, *per se* height-adjustable stand (45) is foldably mounted about a shaft (44) extending coaxially with the wheel axle, said stand (45) having contiguous with its swivel axle (44) a bent-angled portion (45a) which holds the stand (45) spaced in front of the wheel axle when the stand is swivelled downwards (cycle-resting position) and rests in the well (43) and in the upwardly swivelled out-of-use position engages by a foot-actuation shoulder (45) behind a locking hook (46) spring-mounted on the container (1) (Figs. 2, 3 and 8).

10. Luggage carrier according to any of claims 1 to 9, characterised in that the lock (34) is constituted by a security lock with an insert-passage (34a) for a securing pin (55a) on the end of a securing cable (55), the securing pin (55a) simultaneously passing through the lock flap (56) in the lid (7) (Figs. 3, 4 and 6).

11. Luggage carrier according to any of claims 1 to 10, characterised in that the strap buckle (18, 60) is constituted by a strap plate, with a resilient retaining and locking element (61) for the strap end (26a) and with a fitting (60) with an opening (62) for receiving the strap plate (18), and by a recess (63) which forms a web-like locking edge (63a) for the retaining and locking element (61) and an operating opening for releasing the retaining and locking element (61) (Figs. 11 to 14).

12. Luggage carrier according to claim 11, characterised in that the strap plate (18) is made in two pieces of metal or in one piece of plastic, in a frame member (64) incorporates the retaining and locking element (61) elastically joined thereto by a resilient web (61a) and having a plurality of through-slots (65) for the strap end (26a) and a locking edge (63a) and protrudes obliquely from the plane of the frame member (64) and is adapted to be moved into the frame member (64) to release the strap plate (18) from the fitting (60) (Fig. 13).

13. Luggage carrier according to claims 11 and 12, characterised in that the strap buckle fitting (60) is constituted by a flat U-shaped profile into whose U-shaped web (60a) the operating opening (63) is incorporated and in a U-shaped side-piece (60b) incorporates the slot-shaped insert opening (62), and the profiled web between the operating opening (63) and the insert opening (62) produces the locking edge (63a) for the locking and retaining element (61) (Fig. 14).

14. Luggage carrier according to any of claims 1 to 13, characterised in that a collapsible storm protector (67) is adapted to be removably fixed to the container (1) and the lid (7) swivelled into the sitting position, said protector (67) featuring two side linkages (69) adapted to be collapsed together and to be swung and locked into swivel bearings (68) moulded on the container side walls (1a), support stays (70) swivel-mounted and adapted to be set up on said linkages (69), and a flexible cover sheet (71) fastened to the support stays (70) and passing as far as the front bridge (31), said sheet (71) forming a continuous airway (L) with the ventilation slots (33) provided in the bridge (31) and that of the backrest edge (7a) thereof (Fig. 2).

15. Luggage carrier according to any of claims 1 to 14, characterised in that on its external face the lid (7) has a plane storage surface (7b) for accommodating articles being transported (Fig. 3).

## Revendications

1. Porte-bagages pour véhicule à deux roues comprenant un conteneur (1) à deux chambres ouvertes vers le haut, un espace libre, conçu sous forme de carter de roue (2) prévu entre les deux chambres pour embrasser une roue (3) du véhicule et permettre le montage du porte-bagages sur le cadre et sa prise d'appui dans la zone du moyeu de la roue du véhicule, et un couvercle (7) monté, mobile, sur le conteneur (1), ce couvercle (7) étant amené dans une position de fermeture, dans laquelle il recouvre les chambres (4) du conteneur (1), et dans une position relevée, dans laquelle il découvre, partiellement,les chambres (4) et forme un siège en forme de coque (7).,
caractérisé en ce que
le siège en forme de coque (7) est monté, par un bord (8), avec un axe de pivotement horizontal (9), à une armature de guidage (10), dans laquelle il peut être pivoté de la position de fermeture dans une position d'ouverture relevée et
que l'armature de guidage (10) est montée sur le conteneur (1) et pivote, sur un autre axe horizontal (11), et que, dans la position relevée au-dessus de l'ouverture (6) du conteneur (1), cette armature de guidage (10) peut être basculée avec la coque (7) pour former un siège pour enfant, cette coque (7), fixée en position désirée par l'armature de guidage et le carter de roue, prenant appui sur le conteneur (1).

2. Porte-bagages selon le revendication 1,
caractérisé en ce que
l'armature de guidage (10) est bloquée, par rapport au conteneur (1), dans ses deux positions de pivotement, le blocage en position de fermeture du couvercle (7) ayant lieu à l'aide d'une barre de verrouillage (12) qui sert à abaisser et relever le couvercle (7), tandis que le blocage en position relevée du couvercle (7), formant siège, se fait à l'aide d'auxiliaires d'arrêt (13, 14).

3. Porte-bagages selon les revendications 1 et 2,
caractérisé en ce que
l'armature de guidage (10) présente deux leviers coudés, latéraux, dont les côtés (10a, 10b), disposés à angle obtus par rapport l'un à l'autre, sont de différente longueur, le côté le plus court (10a) présentant, à son extrémité libre, l'axe de pivotement (9) du couvercle (7), tandis que le côté le plus long (10b) est monté à son extrémité libre, pivotant dans le deuxième axe de pivotement (11), dans le côté supérieur du conteneur (1)
et que, dans la zone de jointure des deux branches de levier (10a, 10b), un évidement (14) est prévu, dans lequel, dans une première position, la barre de verrouillage (12), déplaçable et pouvant être assurée dans les deux positions par, au moins, un levier de sécurité (12a), vient s'engager, tandis que dans la deuxième position ce sont des nez d'arrêt (14), formés à partir du conteneur (1), qui s'y enclenchent (cf. fig. 4 à 6).

4. Porte-bagages selon l'une des revendications 1 à 3,
caractérisé en ce que,
dans la position formant siège, le couvercle (7) s'appuie, à l'aide d'une moulure (15) du dossier, sur un bloc d'appui (16) porté par une moulure (16a) du carter de roue (2) et, à l'aide d'une moulure (17) de la partie formant siège, sur le carter de roue (2) et qu'il est positionné fixement à l'aide de deux pièces de garniture de serrure (60) extérieures de sangles (19) amovibles, lesquelles sont fixées sous le fond (4a) des chambres (4) et au bord supérieur (7a) du dossier du couvercle (7), ainsi qu'à l'aide d'une armature de sûreté (20) montée, pivotable, sur le carter de roue (2) et embrassant le bord (8) côté siège (cf. fig. 2, 4).

5. Porte-bagages selon l'une des revendications 1 à 4,
caractérisé en ce que
l'armature de sûreté (20) est conçue sous forme de levier basculant (22) en U, pivotant, à hauteur variable, autour d'un axe horizontal (21), l'extrémité libre du levier étant pourvue d'un nez de sûreté (22a) formé à partir d'elle et agissant sur le bord (8) du siège, et de deux sangles de sécurité (24) latérales, montées, amovibles, dans des boucles (23) fixées sur le fond (4a) des chambres (4) et assurant l'armature (20) dans sa position pivotable sur le bord du siège (8), deux sangles latérales reposepieds (25), fixées dans les parois latérales (1a) du conteneur (1), et deux sangles de sécurité (26), disposées parallèlement ou en croix par rapport aux garnitures (60) de serrure de la sangle et prévues pour maintenir l'enfant, y étant fixées (cf. fig. 4, 6, 7).

6. Porte-bagages selon l'une des revendications 1 à 5,
caractérisé en ce que
un profilé d'étanchéité (28) est disposé autour du bord du couvercle (7), jusqu'au bord de siège (8) et qu'un rembourrage (29) amovible est inséré dans la coque du siège (7), ce rembourrage étant bloqué, coincé, entre le carter de roue (2) et le nez de sûreté (22a) de l'armature de sécurité (20) pour éviter toute blessure et former une pièce de transition en direction de l'armature de sécurité (20) (cf. fig. 6).

7. Porte-bagages selon l'une des revendications 1 à 6,
caractérisé en ce que
le conteneur (1) présente, sur son côté voisin de la fixation du cadre, un pont transversal, antérieur (31), équipé de poignées de préhension (32), de fentes d'aération (33) et d'un point de fixation (30) pour la fixation du conteneur sur le cadre (5) du véhicule à deux roues et pour une serrure (34), tandis que son côté opposé présente un pont arrière (35), plus bas, sur lequel, en position fermée du couvercle (7), il prend appui à l'aide de son bord (8) équipé de l'axe (9) (cf. fig. 3 à 6).

8. Porte-bagages selon l'une des revendications 1 à 7,
caractérisé en ce que
le fond (4a) de chacune des chambres (4) est pourvue d'une cavité (36) équipée d'une cornière de fixation (37) pour la fixation du conteneur (1) sur la pente du cadre (5) du véhicule, le côté horizontal situé sous la cavité (36) étant réglable en continu, dans le sens de l'axe du moyeu en vue de compenser les différences de longueur d'axe, ce réglage s'effectuant à l'aide d'un trou oblong (38) et d'une vis de de fixation (42) qui mord dans celui-ci, tandis que son côté vertical (37b), dirigé vers le bas, présente plusieurs trous de passage (39) pour vis de fixation (42) (cf. fig. 3 et 8).

9. Porte-bagages selon l'une des revendications 1 à 8,
caractérisé en ce que
un support (45) rabattable en forme de U, réglable en hauteur et tournant autour d'un axe (44) coaxial par rapport à l'axe de la roue, est monté, rabattable, dans une moulure (43), côté fond, des deux parois latérales (19) du conteneur (1), ce support (45) présentant, à la suite de son axe de pivotement (44), un coude (45a) qui - le support étant en position rabattue vers le bas - maintien celui-ci à intervalle de l'axe de la roue et prend appui dans la moulure (43), tandis que dans la position pivotée vers le haut, position de non utilisation, il s'engage, à l'aide d'un appendice (45) actionné au pied, derrière un crochet d'arrêt (46) monté sur le conteneur (1) et faisant ressort.

10. Porte-bagages selon l'une des positions 1 à 9, caractérisé en ce que la serrure (34) est une serrure de sûreté avec canal d'enfichage (34a) pour une goupille de sécurité (55a) qui termine un cordon de sûreté (55) et saisit, simultanément, la pièce (56) de la serrure du couvercle (7) (cf. fig. 3, 4 et 6).

11. Porte-bagages selon l'une des revendications 1 à 10,
caractérisé en ce que
la serrure de sangle (18, 60) est composée d'une languette équipée d'une pièce de retenue et d'enclenchement (61) faisant ressort et d'une garniture (60) avec ouverture (62) pour l'insertion de la languette (18), ainsi que d'un évidement (63) formant un bord d'arrêt (63a) pour la pièce de retenue et d'enclenchement (61) et une ouverture d'actionnement pour le relâchement de la pièce de retenue et d'enclenchement (61) (cf. fig. 11 à 14).

12. Porte-bagages selon la revendication 11,
caractérisé en ce que
la languette (18) de la sangle est formée de deux pièces en métal ou d'une pièce en matière plastique dans un cadre (64) présentant une pièce de retenue et d'enclenchement (61) y reliée élastiquement à l'aide d'un pont (61a) faisant ressort et que la pièce de retenue et d'enclenchement (61) est pourvue de plusieurs fentes de passage (65) pour l'extrémité (26a) de la sangle et un bord d'arrêt (63a) et qu'elle fait saillie, obliquement, hors du niveau du cadre (64) et est mobile dans le cadre pour faire sortir la languette (18) de la garniture de serrure (60) (cf. fig. 13).

13. Porte-bagages selon l'une des revendications 11 et 12,
caractérisé en ce que
la garniture de serrure (60) consiste en un profilé plat en forme de U, dans le dos (60a) duquel l'ouverture d'actionnement (63) est pratiquée, tandis que l'ouverture d'enfichage (62) est pratiquée, sous forme de fente, dans la branche (60b) du profilé en U, le dos du profilé, situé entre l'ouver-ture d'actionnement (63) et l'ouverture d'enfichge (62) formant le bord d'arrêt (63a) pour la pièce de retenue et d'enclenchement (61) (cf. fig. 14).

14. Porte-bagages selon l'une des revendications 1 à 13,
caractérisé en ce que
une protection contre les intempéries (67) repliable est fixée, amoviblement, au conteneur (1) et au couvercle (7) pivoté en position formant siège et est pourvue de deux tringles latérales (69), repliables, montées dans des coussinets pivotants (68), formés à partir des parois latérales (1a) du conteneur (1), et de de montants portants (70) déployables, y montés, pivotables, ainsi que d'une feuille (71) flexibles, formant capote, fixée aux montants (70) et descendant jusqu'au pont antérieur (31), cette capote (71) formant un conduit d'air (L) continu avec les fentes d'aération prévues dans le pont (31) et le bord (7a) du dossier (cf. fig. 2).

15. Porte-bagages selon l'une des revendications 1 à 14,
caractérisé en ce que
le couvercle (7) présente, sur son côté extérieur, une surface plane (7b), destinée à recevoir les objets à transporter (cf. fig. 3).
